**Europäisches Patentamt**

**European Patent Office**

**Office européen des brevets**

(19)

(11) Numéro de publication: **0 143 027**
**B1**

(12) # FASCICULE DE BREVET EUROPÉEN

(45) Date de publication du fascicule du brevet:
**17.12.86**

(51) Int. Cl.⁴: **B 01 J 20/20, C 01 B 31/12**

(21) Numéro de dépôt: **84402040.4**

(22) Date de dépôt: **11.10.84**

(54) **Charbon actif imprégné pour la filtration des halogénures de cyanogène et procédés de préparation.**

(30) Priorité: **25.10.83 FR 8316942**

(43) Date de publication de la demande:
**29.05.85 Bulletin 85/22**

(45) Mention de la délivrance du brevet:
**17.12.86 Bulletin 86/51**

(84) Etats contractants désignés:
**DE GB IT NL**

(56) Documents cité:
**FR-A-1 575 501**
**US-A-2 920 051**
**US-A-2 963 441**

(73) Titulaire: **ETAT- FRANCAIS représenté par le DELEGUE GENERAL POUR L'ARMEMENT, Bureau des Brevets et Inventions de la Délégation Générale pour l'Armement 26, Boulevard Victor, F-75996 Paris Armées (FR)**

(72) Inventeur: **Fangeat, Roland, 4 Rue Joffre, F-91710 Vert Le Petit (FR)**

**EP 0 143 027 B1**

LIBER, STOCKHOLM 1986

# 0 143 027

**Description**

Le secteur technique de la présente invention est celui des charbons actifs imprégnés utilisés pour l'épuration des gaz contenant des composés toxiques ainsi que leurs procédés de préparation.

L'utilisation des charbons actifs dans l'épuration de l'air ou d'autres fluides est bien connue dans des filtres individuels de protection respiratoire ou des filtres collectifs de centrales de filtration par exemple des navires, des abris. Le rôle essentiel de ces filtres est d'éliminer de l'air tout polluant de façon à le rendre respirable sans risque d'intoxication de l'utilisateur. Des polluants comme le tétrachlorure de carbone, le chloropicrine sont adsorbés physiquement par les charbons actifs sans traitement particulier. Cependant, les polluants dont le point d'ébullition est inférieur à 5°C sont faiblement adsorbés et il est nécessaire de prévoir un traitement supplémentaire du charbon pour retenir des composés comme l'acide cyanhydrique ou le chlorure de cyanogène. Ainsi, un charbon actif efficace contre l'acide cyanhydrique a été décrit dans "Summary Technical Report of the National Defense Research Comittee 1" p. 10 (1946) où on propose une imprégnation du charbon actif avec des sels de cuivre. Un autre charbon actif efficace contre le chlorure de cyanogène a été décrit dans la revue J. Am. Ind. Hug. Assoc. 39, p. 334 (1978) où on propose une imprégnation du charbon avec un mélange cuivre-chrome. Cependant, ces charbons imprégnés voient leur efficacité diminuer fortement lors d'un stockage prolongé en particulier en atmosphère humide et chaude. Des études ont été entreprises pour surmonter cet inconvénient et divers auteurs ont proposé d'incorporer dans ces charbons imprégnés des bases aminées telles la pyridine, la picoline, l'éthylène diamine, les vinylpyridines, les butylamines etc... Le brevet américain 2 963 441 par exemple décrit l'incorporation de la pyridine, de la picoline ou de la 4-éthylmorphine dans des charbons actifs pour améliorer l'efficacité des imprégnations chrome-cuivre contre le chlorure de cyanogène. Malgré ces deux traitements supplémentaires, les essais de vieillissement accéléré ou naturel montrent que la perte d'efficacité contre le chlorure de cyanogène reste importante et qu'en conséquence la durée de vie des filtres fabriqués avec un tel charbon est limitée.

Le but de la présente invention est de fournir un charbon actif apte à assurer la filtration des halogénures de cyanogène, dont l'efficacité n'est pas altérée ni par un stockage prolongé ni par l'humidité ambiante ou par la température, et ce avec un unique agent d'imprégnation.

L'invention a donc pour objet un charbon actif utilisable pour la filtration d'un gaz contenant des composés toxiques notamment les halogènures de cyanogène, caractérisé en ce qu'il comprend une matière d'imprégnation constituée par l'acide pyridine carboxylique et/ou le sel correspondant selon un pourcentage ou taux d'imprégnation compris entre 1 et 30% calculé sur la masse totale.

Le charbon actif peut comprendre de préférence 1 à 10% en masse de matière d'imprégnation.

L'acide pyridinique carboxylique peut être représenté par l'acide 3-pyridinique carboxylique ou l'acide 4-pyridinique carboxylique ou un mélange de ceux-ci.

Le sel de l'acide pyridinique carboxylique peut être celui d'un métal alcalin ou d'un métal de transition.

La matière d'imprégnation peut être représentée par un mélange constitué par l'acide 4-pyridinique carboxylique et son sel de sodium.

Le métal peut être représenté par le lithium, le sodium ou le potassium.

Le métal de transition peut être représenté par le cuivre.

Un procédé de préparation d'un charbon actif selon l'invention est caractérisé en ce que: - on disperse le charbon actif dans une solution aqueuse renfermant 1 à 30% en masse de matière d'imprégnation, - on laisse réagir pendant 10 minutes à température ordinaire, - on essore et on sèche les grains de charbon imprégnés dans un courant d'air chaud à 110°C environ pendant 60 minutes.

Un autre procédé de préparation d'un charbon actif selon l'invention est caractérisé en ce que: - on mélange intimement le charbon actif avec la matière d'imprégnation à raison de 5% en masse, - on place ce mélange dans un réacteur et on fait le vide primaire, - on chauffe ce réacteur sous vide à une température de l'ordre de 170°C pendant une heure environ, sous agitation puis on laisse refroidir à la température ordinaire.

La réactivité de la fonction pyridine vis-à-vis du chlorure de cyanogène en particulier est bien connue; cependant, on n'a jamais produit des charbons actifs comportant une matière d'imprégnation constituée par un dérivé pyridinique seul. De plus, on sait que lorsqu'on traite un charbon actif avec la pyridine ou la picoline comme signalé ci-dessus, il n'est pas possible d'y incorporer des pourcentages supérieurs à 2 en raison de la désorption ultérieure du charbon qui rend celui-ci inapte à une utilisation pratique. On a découvert que, de façon surprenante, les acides pyridiniques carboxyliques et leurs sels peuvent être incorporés aux charbons actifs en quantité importante et sans désorption ultérieure, pour retenir le chlorure de cyanogène et que ses propriétés étaient stables dans le temps. Enfin, les charbons proposés dans l'art antérieur devaient impérativement comprendre deux matières d'imprégnation, déposées en deux phases successives alors que dans l'invention on n'utilise qu'une seule matière d'imprégnation, ce qui constitue pour l'homme de l'art une simplification évidente.

Les charbons actifs mis en oeuvre dans l'invention sont ceux du commerce comme par exemple les charbons obtenus à partir de la noix de coco, dont la granulométrie, le taux d'humidité, la texture poreuse sont parfaitement connus.

La granulométrie est un paramètre important qui modifie les performances des grains du charbon actif en adsorption dynamique. On a utilisé des charbons connus dont la fraction granulométrique la plus importante est retenue par un tamis de 1 mm.

Le taux d'humidité est mesuré en pesant une masse de charbon avant et après séchage à 110°C pendant 1

2

heure environ. Le taux d'humidité est exprimé en pourcentage par rapport à la masse de charbon humide. Il est de 30 à 35% environ.

La texture poreuse est caractérisée par l'aire massique apparente et la distribution des rayons des pores. L'aire massique apparente comprend l'ensemble des surfaces des parois capillaires à l'intérieur d'un grain de substance ainsi que la surface géométrique du grain considéré. L'aire massique apparente est mesurée par la méthode BET mise au point par BRUNAUER, EMMETT et TELLER et celle-ci est la plus généralement utilisée. Elle est de 1200 à 2000 $m^2/g$. Les pores sont caractérisés par le rayon de leur ouverture et celui-ci s'étend de 2,5 à $10^{-6}A$ (1Å = 0,1 nm).

L'imprégnation a pour but de fixer dans les pores de charbon actif des éléments chimiques. Cette opération est nécessaire lorsque l'interaction solide gaz polluant n'est pas assez forte. Selon l'invention, l'imprégnation peut être effectuée soit classiquement en phase aqueuse soit en phase vapeur. L'imprégnation en phase liquide consiste à plonger le charbon actif dans une solution aqueuse contenant la matière d'imprégnation dont la quantité est déterminée de façon à ce que tout le volume de liquide soit absorbé par le charbon actif. On sèche à une température de 110°C pour éliminer la phase liquide. Le mode de séchage conditionne la répartition de la matière d'imprégnation dans les pores du charbon actif. Pour cela, on fait passer au travers du lit de charbon un courant d'air chaud à la température indiquée, le débit étant réglé de façon à ce que les grains de charbon soient agités de façon continuelle. Concernant l'imprégnation en phase vapeur, on utilise les caractéristiques de sublimation de la matière d'imprégnation. Dans l'invention, la température de sublimation de la matière d'imprégnation est de l'ordre de 315°C mesurée dans les conditions normales. On mélange donc intimement le charbon actif et la matière d'imprégnation sous formé de poudre dans un réacteur et l'on y fait un vide primaire. Ce réacteur est porté sous vide à 170°C pendant 1 heure sous agitation. Après refroidissement, on obtient le charbon imprégné. La matière d'imprégnation est complètement adsorbée et par pesée on constate que le rendement d'imprégnation est d'environ 95%.

L'efficacité du charbon actif est déterminée par le temps qui correspond à la durée pour laquelle la concentration d'agent polluant détectée en aval du lit de charbon actif dans un effluent gazeux est inférieure ou égale à une concentration donnée. Cette concentration est fonction de la toxicité du produit. Dans le cas des halogénures de cyanogène, cette limite est fixée couramment à 30 $mg/m^3$. Cette durée, appelée temps de rupture, est fonction de très nombreux facteurs que l'on standardise comme indiqué dans le tableau ci-dessous:

| PARAMETRES | | VALEURS |
|---|---|---|
| température de l'effluent gazeux | : | 18°C |
| hygrométrie de l'effluent gazeux | : | 90% |
| débit de l'effluent gazeux | : | 30 l/mn |
| concentration amont en halogénure de cyanogène | : | 5 $g/m3$ |
| concentration aval maximum admissible | : | 30 $mg/m3$ |
| volume de charbon actif | : | cylindre de 10 cm de diamètre et de 3 cm de hauteur |

L'invention sera mieux comprise à la lumière des exemples donnés ci-après à titre d'illustration en relation avec les dessins dans lesquels:

- la fig. 1 représente les courbes de variation des temps de rupture en fonction du taux d'imprégnation de certains charbons selon l'invention,
- la fig. 2 représente les courbes de variation du temps de rupture en fonction de la durée du vieillissement d'un charbon selon l'invention et d'un charbon selon l'art antérieur,
- la fig. 3 représente les courbes de variation du temps de rupture en fonction de l'hygrométrie d'un charbon selon l'invention et d'un charbon selon l'art antérieur.

Avant essai, tous les charbons actifs testés sont conditionnés pendant 48 heures à une température de 18°C et une hygrométrie relative de 90%. La quantité d'halogénure de cyanogène en amont est dosée en faisant passer l'effluent gazeux (l'azote) chargé en halogénure de cyanogène dans un barboteur contenant de la soude. La quantité d'halogénure de cyanogène en aval est mesurée en continu par colorimètrie en prélevant une quantité aliquote de l'effluent gazeux ou à l'aide d'un spectrophotomètre infra-rouge.

On réalise à partir d'un charbon dont les caractéristiques ont été mentionnée précédemment, une série d'inprégnations en phase liquide selon le procédé enseigné ci-dessus avec des taux variables d'acide 4-pyridinique carboxylique (ApC$_4$). On mesure le temps de rupture dans les conditions mentionnées dans le tableau précédent et on obtient les résultats suivants:

| EXEMPLES | 1 | 2 | 3 | 4 | 5 | 6 | 7 | 8 |
|---|---|---|---|---|---|---|---|---|
| Taux d'imprégnation % | 0 | 1 | 2 | 3 | 5 | 10 | 15 | 30 |
| Temps de rupture mn | 9 | 18 | 21 | 24 | 28 | 34 | 39 | 25 |

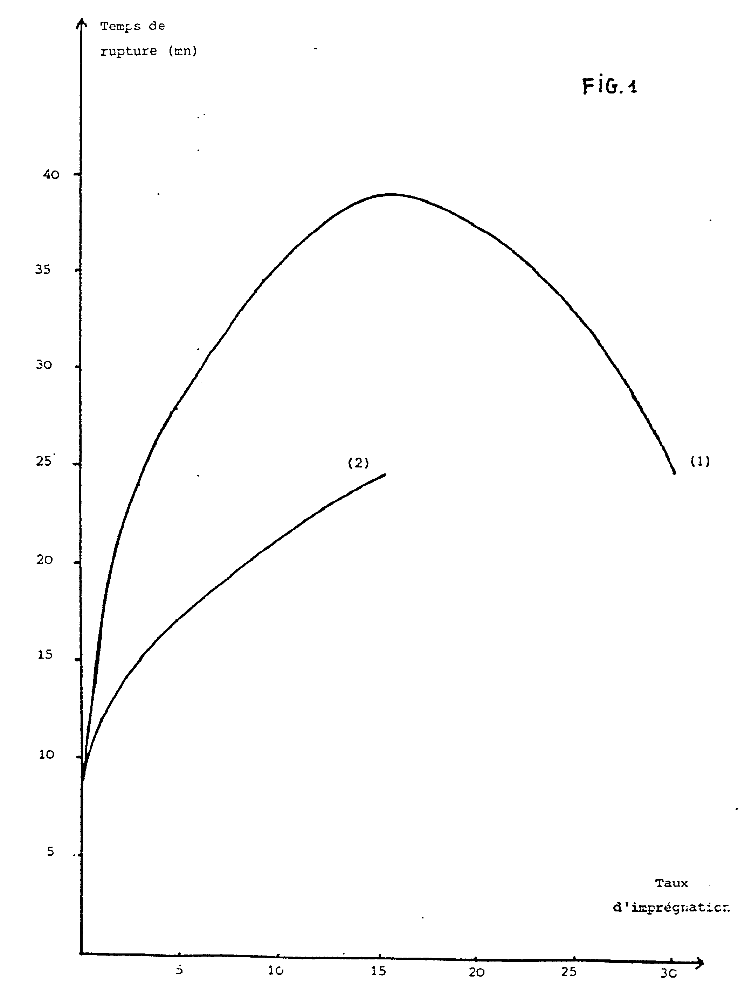

Ces valeurs sont reportées sur la figure 1 courbe 1 et on voit que l'efficacité est fonction du taux d'imprégnation jusqu'à environ 15% puis décroit. On réalise par le procédé en phase vapeur décrit antérieurement des imprégnations à taux variables et on mesure dans les mêmes conditions le temps de rupture.

| EXEMPLES | 9 | 10 | 11 | 12 | 13 | 14 |
|---|---|---|---|---|---|---|
| Taux d'imprégnation % | 1 | 3 | 5 | 7 | 10 | 15 |
| Temps de rupture mn | 12 | 15 | 17 | 19 | 21 | 25 |

On constate la encore une augmentation du temps de rupture en fonction du taux d'imprégnation (courbe 2 fig. 1). L'efficacité obtenue par une impregnation en phase liquide est supérieure à celle obtenue par une imprégnation en phase vapeur. On obtient des résultats analogues avec l'acide 3-pyridinique carboxylique tant en phase liquide qu'en phase vapeur.

On réalise à partir du même charbon une série d'imprégnations en phase liquide selon le même procédé, avec des taux variables, de sel de sodium de l'acide-pyridinique carboxylique. On mesure les temps de rupture dans les mêmes conditions et on obtient les résultats suivants:

| EXEMPLES | 15 | 16 | 17 | 18 |
|---|---|---|---|---|
| Taux d'imprégnation en sel de sodium en % | 3 | 5 | 7 | 10 |
| Temps de rupture en mn | 39 | 60 | 71 | 79 |

On constate une augmentation régulière du temps de rupture en fonction du taux d'imprégnation. On obtient des résultats sensiblement identiques avec les sels de lithium et de potassium de l'acide 4-pyridinique carboxylique ou de l'acide 3-pyridinique carboxylique, ainsi que les sels cuivriques des mêmes acides. De façon générale, on a remarqué que les temps de rupture obtenus avec une imprégnation à base de sel étaient en moyenne supérieurs à ceux obtenus avec une imprégnation avec l'acide correspondant.

Concernant l'influence du taux d'humidité du charbon actif imprégné à l'APC sur l'efficacité contre le chlorure de cyanogène, on sait que la réaction chimique entre le chlorure de cyanogène et l'acide 4-pyridinique carboxylique nécessite la présence d'eau. Il est donc nécessaire pour que la réaction se produise que le charbon actif renferme dans sa texture poreuse des molécules d'eau qui vont permettre la réaction chimique. Il est bien connu que la présence d'eau diminue la capacité d'adsorption physique du charbon actif.

On va donc étudier l'influence du taux d'humidité sur l'efficacité du charbon actif et sur le phénomène de désorption, en utilisant le charbon imprégnée de l'exemple 5. Les mesures sont effectuées comme indiqué dans le tableau initial.

Les résultats sont rassemblés dans le tableau suivant:

| Taux d'humidité en % : | 0 | 3 | 5 | 7 | 13 | 15 | 23 | 31 | 34 : |
|---|---|---|---|---|---|---|---|---|---|
| Temps de rupture en (mn) | :20 | :22 | :24 | :27 | :28 | :29 | :29 | :28 | :28 : |

En ce qui concerne l'efficacité, on observe une augmentation du temps de rupture jusqu'à une valeur voisine du taux d'humidité de 13%, puis à partir de cette valeur un palier (courbe 1, figure 2). Ce résultat est remarquable car il montre que même pour des valeurs élevées du taux d'humidité l'efficacité au chlorure de cyanogène du charbon actif imprégné selon l'invention n'est pas diminuée. D'un point de vue pratique, lorsque le charbon est utilisé pour l'épuration de l'air ambiant le taux d'humidité est supérieur à 10%. On a donc dans ces conditions l'efficacité maximum si l'on se réfère au temps de rupture.

Les résultats obtenus avec une imprégnation à 5% d'APC$_4$ en phase vapeur et une imprégnation à 5% en phase liquide du sel de sodium de l'APC$_4$ présentent les mêmes caractéristiques.

On soumet un charbon imprégné de façon connue avec 4% de cuivre et 2% de chrome aux mêmes taux d'humidité et on trace la courbe d'efficacité en fonction du taux d'humidité (courbe 2 figure 2). Cette efficacité diminue fortement en fonction du taux hygrométrique.

On voit donc que les performances du charbon actif imprégné selon l'invention s'améliorent en atmosphère humide contrairement aux imprégnations classiques qui voient leurs performances diminuer fortement.

Pour etudier le vieillissement accéléré en atmosphère humide et chaude, on mesure le temps de rupture des charbons actifs des exemples 2,4, 5,6 et 7 après un vieillissement accéléré. Ce vieillissement accéléré consiste à placer un charbon actif conditionne à 18°C et à une hygrométrie de 90% dans un récipient fermé hermétiquement, lequel est placé quatre jours dans une étuve à 50°C, le temps de rupture est mesuré dans les conditions standard avant et après vieillissement.

On obtient les résultats suivants:

| EXEMPLES | 2 | 4 | 5 | 6 | 7 |
|---|---|---|---|---|---|
| Temps de rupture avant vieillisse- ment en mn | 17 | 25 | 28 | 34 | 39 |
| Temps de rupture après vieillisse- ment en mn | 19 | 24 | 35 | 32 | 39 |

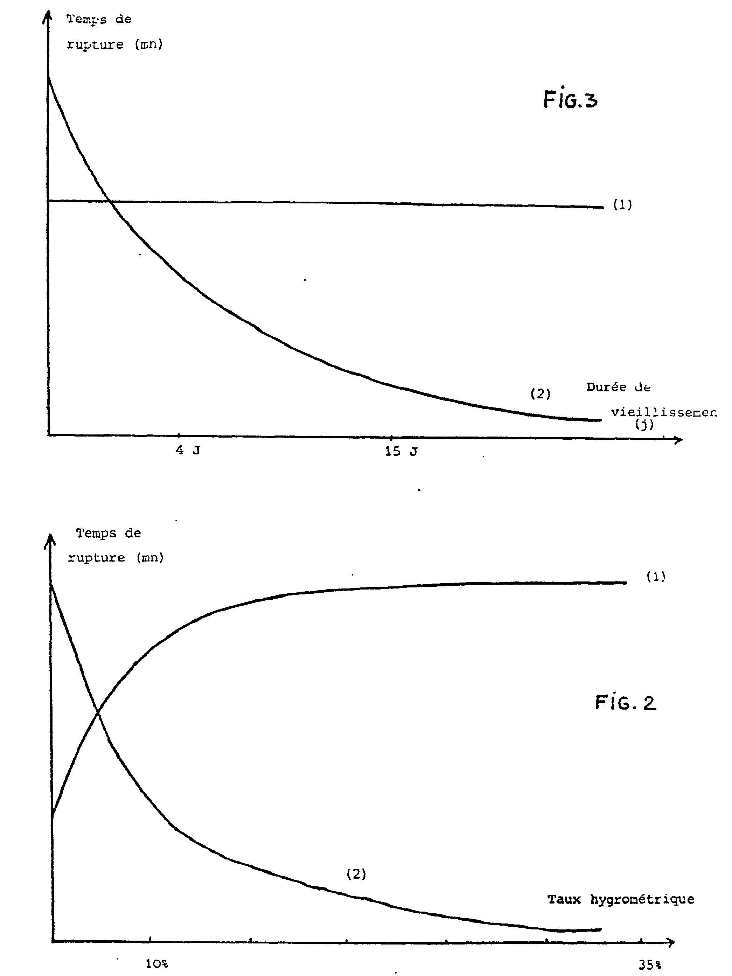

Les essais effectués avec le charbon imprégné selon l'invention montrent que le phénomène de vieillissement en atmosphère humide et chaude n'est pas perceptible. Les mesures effectuées après un vieillissement de un mois dans les conditions décrites ci-dessus confirment ce résultat (courbe 1 figure 3).

On réalise dans les mêmes conditions le vieillissement d'un charbon actif imprégné par 5% de sel de sodium de l'acide pyridinique carboxylique en phase aqueuse. On constate que le temps de rupture de 60 minutes avant vieillissement est conservé après vieillissement. On obtient les mêmes résultats avec un charbon imprégné avec un sel de lithium ou de potassium de l'acide pyridinique ainsi que le sel cuivrique de l'acide pyridinique. On soumet un charbon actif imprégné de façon connue avec 4% de cuivre et 2% de chrome à un vieillissement accéléré dans les mêmes conditions. On observe (courbe 2 figure 3) une baisse très sensible après quatre jours de vieillissement qui se poursuit pour des durées de vieillissement plus longue supérieures à 1 mois.

L'imprégnation des charbons actifs telle que proposée dans l'invention est donc particulièrement adaptée à l'arrêt des halogènures de cyanogène en particulier du chlorure de cyanogène. Ses performances ne sont pas altérées ni par un vieillissement en atmosphère humide et chaude, ni par un taux d'hygrométrie élevé de l'air à épurer contrairement aux imprégnations classiques utilisées actuellement.

**Revendications**

1 - Charbon actif utilisable pour la filtration d'un gaz contenant des composés toxiques notamment les halogénures de cyanogéné, caractérisée en ce qu'il comprend une matière d'imprégnation constituée par l'acide pyridinique carboxylique et/ou le sel correspondant selon un pourcentage ou taux d'imprégnation compris entre 1 et 30% calculé sur la masse totale.

2 - Charbon actif selon la revendication 1, caractérisé en ce qu'il comprend 1 à 10% en masse de matière d'imprégnation.

3 - Charbon actif selon la revendication 1 ou 2, caractérisé en ce que l'acide pyridinique carboxylique est représenté par l'acide 3-pyridinique carboxylique ou l'acide 4-pyridinique carboxylique ou un mélange de ceux-ci.

4 - Charbon actif selon la revendication 1 ou 2, caractérisé en ce que le sel de l'acide pyridinique carboxylique est celui d'un métal alcalin ou d'un métal de transition.

5 - Charbon actif selon la revendication 4, caractérisé en ce que la matière d'imprégnation est représentée par un mélange constitué par l'acide 4-pyridinique carboxylique et son sel de sodium.

6 - Charbon actif selon la revendication 4, caractérisé en ce que le métal est représenté par le lithium, le sodium et le potassium.

7 - Charbon actif selon la revendication 4, caractérisé en ce que le métal de transition est représenté par le cuivre.

8 - Procédé de préparation d'un charbon actif selon l'une quelconque des revendications 1 à 7, caractérisé en ce que:
- on disperse le charbon actif dans une solution aqueuse renfermant 1 à 30% en masse de matière d'imprégnation,
- on laisse réagir pendant 10 minutes à température ordinaire,
- on essore et on sèche les grains de charbon imprégné dans un courant d'air chaud à 110°C environ pendant 60 minutes.

9 - Procédé de préparation d'un charbon actif selon l'une quelconque des revendications 1 à 7, caractérisé en ce que:
- on mélange intimement le charbon actif avec la matière d'imprégnation à raison de 5% en masse,
- on place ce mélange dans un réacteur et on fait le vide,
- on chauffe ce réacteur sous vide à une température de l'ordre de 170°C pendant une heure environ sous agitation, puis on laisse refroidir à la température ordinaire.


**Patentansprüche**

1. - Aktivkohle zur Filterung eines Giftstoffe und insbesondere Cyanhalogenide entnaltenden Gases, dadurch gekennzeichnet, dass sie einen aus Pyridin-Karbonsäure und/oder dem entsprechenden Salz bestehenden Tränkstoff umfasst, und zwar in einem Prozentsatz oder Imprägnierverhältnis zwischen 1 und 30 % der Gesamtmasse.

2. - Aktivkohle nach Anspruch 1, dadurch gekennzeichnet, dass sie 1 bis 10 % Masseanteile Tränkstoff umfasst.

3. - Aktivkohle nach einem der Ansprüche 1 oder 2, dadurch gekennzeichnet, dass die Pyridin-Karbonsäure aus 3-Pyridin-Karbonsäure oder 4-Pyridin-Karbonsäure oder aus einer Mischung beider besteht.

4. - Aktivkohle nach einem der Ansprüche 1 oder 2, dadurch gekennzeichnet, dass das Salz der Pyridin-Karbonsäure dasjenige eines Alkalimetalls oder eines Übergangsmetalls ist.

5. - Aktivkohle nach Anspruch 4, dadurch gekennzeichnet, dass der Tränkstoff aus einem Gemisch von 4-Pyridin-Karbonsäure und ihrem Natriumsalz besteht.

6. - Aktivkohle nach Anspruch 4, dadurch gekennzeichnet, dass als Metall Lithium, Natrium oder Kalium verwendet wird.

7. - Aktivkohle nach Anspruch 4, dadurch gekennzeichnet, dass als Übergangsmetall Kupfer verwendet wird.

8. - Verfahren zur Herstellung von Aktivkohle nach einem der vorstehenden Ansprüche 1 bis 7, dadurch gekennzeichnet, dass:
- die Aktivkohle in einer wässrigen Lösung mit 1 bis 30 % Masseanteilen Tränkstoff dispergiert wird,
- die Reaktion während 10 Minuten bei gewöhnlicher Temperatur aufrechterhalten wird,
- die getränkten Kohlekörner in einem Heissluftstrom bei etwa 110°C über eine Dauer von 60 Minuten entwässert und getrocknet werden.

9. - Verfahren zur Herstellung einer Aktivkohle nach einem der vorstehenden Ansprüche 1 bis 7, dadurch gekennzeichnet, dass:
- die Aktivkohle mit einem Masseanteil von 5 % Tränkstoff innig durchmischt wird,
- dieses Gemisch in einen Reaktor eingebracht und dieser evakuiert wird,
- dieser Vakuumreaktor während etwa einer Stunde auf eine Temperatur von etwa 170°C unter gleichzeitigem Rühren aufgeheizt und anschliessend bei Raumtemperatur abgekühlt wird.

**Claims**

1 - Activated charcoal used to filter a gas containing poisonous contaminants, in particular cyanogen halogenides characterized in that it includes an impregnating material consisting of pyridine carboxylic acid and/or the corresponding salt according to an impregnation percentage or rate between 1 and 30 percent computed on the total weight.

2 - Activated charcoal as per claim 1 characterized in that it includes to 10 percent by weight of impregnating material.

3 - Activated charcoal as per claim 1 or 2, characterized in that the isonicotinic acid is represented by pyridine-3-carboxylic acid or pyridine-4-carboxylic acid or a mixture thereof.

4 - Activated charcoal as per claim 1 or 2 characterized in that the pyridine carboxylic acid salt is that of an alkali metal or a transition metal.

5 - Activated charcoal as per claim 4 characterized in that the impregnating material is represented by a mixture consisting of pyridine-4-carboxylic acid and its sodium salt.

6 - Activated charcoal as per claim 4, characterized in that the metal is represented by lithium, sodium and potassium.

7 - Activated charcoal as per claim 4, characterized in that the transition metal is represented by copper.

8 - Process for preparing activated charcoal as per one of claims 1 to 7, characterized in that:
- the activated charcoal is dispersed in an aqueous solution containing to 30 percent impregnating material by weight
- the reaction is allowed to continue for 10 minutes at room temperature
- the impregnated charcoal pellets are drained and dried in a hot draft at 110°C for 60 minutes.

9.- Process for preparing an activated charcoal as per one of claims 1 to 7 characterized in that:
- the activated charcoal is intimately mixed with the impregnating material in a proportion of 5 percent by weight
- this mixture is placed in a reactor in which a vacuum is then created
- the reactor is heated under vacuum to a temperature of approximately 170°C while stirring for approximately one hour then allowed to cool to room temperature.

FIG. 1

Temps de
rupture (mn)

FiG.3

(1)

(2)   Durée de

vieillissemen.
(j)

4 J                15 J

Temps de
rupture (mn)

(1)

FiG. 2

(2)

Taux hygrométrique

10%                                              35%

3